# EUROPEAN PATENT SPECIFICATION

(11) **EP 1 143 166 B1**
(45) Date of publication and mention of the grant of the patent: **28.06.2006**
(21) Application number: 01108293.0
(22) Date of filing: 02.04.2001
(51) Int. Cl.: F16H 9/18

(54) **V belt type transmission**
Keilriemengetriebe
Variateur de vitesse à courroie en "V"

(30) Priority: 06.04.2000 JP 2000105371
(43) Date of publication of application: 10.10.2001
(73) Proprietor: HONDA GIKEN KOGYO KABUSHIKI KAISHA, Minato-ku, Tokyo (JP)
(72) Inventor: Kuga, Shinji, 4-1 Chuo 1-chome, Wako-shi, Saitama (JP); Ohyama, Takashi, 4-1 Chuo 1-chome, Wako-shi, Saitama (JP); Tsuchiya, Ryuji, 4-1 Chuo 1-chome, Wako-shi, Saitama (JP)
(74) Representative: Liska, Horst

(56) References cited:
- DE-A- 2 423 746
- DE-A- 2 741 146
- PATENT ABSTRACTS OF JAPAN vol. 014, no. 563 (M-1058), 14 December 1990 (1990-12-14) & JP 02 240437 A (YAMAHA MOTOR CO LTD), 25 September 1990 (1990-09-25)
- PATENT ABSTRACTS OF JAPAN vol. 1999, no. 11, 30 September 1999 (1999-09-30) & JP 11 173392 A (KAWASAKI HEAVY IND LTD), 29 June 1999 (1999-06-29)

## Description

The present invention relates to an engine combined with a V belt type transmission wherein power is transmitted using a V belt mounted bridgewise between pulleys, corresponding to the preamble of claim 1.

In a V belt type transmission wherein a V belt is mounted bridgewise between a pair of pulleys comprising a fixed pulley half and a movable pulley half and power is transmitted in a continuously various speed change mode, the fixed pulley half is fixed to an end portion of a crank shaft and the movable pulley half is disposed inside the fixed pulley half. In this case, according to the prior art, the fixed pulley half is clamped and fixed with a nut which is threadedly engaged with a male screw formed on an end portion of the crank shaft.

An example described in JP-A No. Hei 9-264391 is shown in Fig. 6.

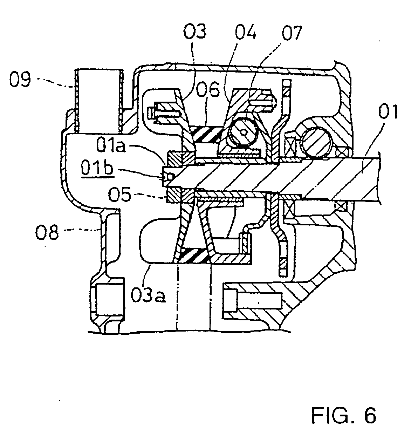

This example is concerned with a V belt type transmission used in a scooter type vehicle. Fig. 6 illustrates a pulley 02 mounted on a crank shaft 01 side of the V belt type transmission.

A male screw 01a and a serrated portion are formed projectingly on an end portion of the crank shaft 01 and a fixed pulley half 03, which is serration-fitted on the end portion of the crank shaft, is clamped and fixed with a nut 05 which is threadedly engaged with the male screw 01a. Inside the fixed pulley half 03 is supported a movable pulley half 04 axially slidably.

A V belt 06 is entrained on and between the fixed pulley half 03 and the movable pulley half 04, and a centrifugal weight 07 is provided on the back of the movable pulley half 04. The centrifugal weight 07, which operates in accordance with the speed of rotation of the crank shaft 01, moves the movable pulley half 04 axially to change the winding diameter of the V belt, thereby transferring power in a continuously various speed change mode to the rear wheel side.

Cooling fins 03a are formed on the back of the fixed pulley half 03, and by rotation of the cooling fins 03a air is introduced through an air inlet pipe 09 provided in a belt cover 08 to cool a power transfer mechanism, thereby improving the durability.

In case of thus introducing the outside air into the inside of the power transfer cover 08, a filter or the like is sometimes provided in the outside air introducing portion to remove dust or other foreign matters, but fine dust or the like and water get into the inside of the belt cover 08 and reach the treadedly engaged portion of the male screw 01a and the nut 05 at the end portion of the crank shaft 01, which may result in rusting and the threadedly engaged portion being clamped more strongly than necessary to the extent that it is difficult to loosen the nut 05 in maintenance.

Moreover, a posture varying force of the fixed pulley half 03 against the crank shaft 01, which is induced by a belt reaction force, acts more strongly on the nut 05 which is clamped to the outside of the fixed pulley half 03 in threaded engagement with the end portion of the crank shaft. Consequently, for ensuring a sufficient strength, the threadedly engaged portion itself of the male screw 01a and the nut 05 becomes larger in size, which may obstruct the introduction of the outside air.

In the case where the crank shaft 01 is an integral type crank shaft formed integrally with crank pins by molding, center holes for supporting the crank shaft 01 at both shaft ends must be formed respectively in male screws 01 a at the shaft ends at the time of machining the crank shaft. As shown in Fig. 6, the center hole 01 b formed in each male screw 01 a is restricted to a size smaller than the size of the male screw 01a. Thus, a sufficient support area is not obtained and it is difficult to attain a high machining accuracy, that is, the machinability is poor.

JP 11173392 A discloses an engine combined with a V belt type transmission in accordance with the preamble of claim 1. There, only one crank shaft end is shown, with a female screw hole having a tapered edge. The engine is a one-cylinder engine, but without disclosing the operation principle thereof, nor the detailed construction of the crank shaft.

Therefore, it is an object of the invention to provide an engine with a V belt type transmission of the generic type capable of clamping the crank shaft firmly and enhancing machining accuracy and improve both machinability and productivity.

For achieving the above-mentioned object, the invention defined in claim 1 resides in an engine combined with a V belt type transmission wherein a V belt is entrained on pulleys, the pulleys comprising a fixed pulley half fixed to one end portion of a crank shaft and a movable pulley half supported on the crank shaft opposedly to the fixed pulley half and axially slidably, wherein the fixed pulley half is clamped with a bolt which is threadedly engaged with a female screw formed inside the one end portion of the crank shaft, characterized in that the engine is a four-cycle two-cylinder type engine with both crank pins having a phase of 360°, wherein the crank shaft is an integral type crank shaft with the crank pins formed integrally with the crank shaft by molding, and open edges of both end portions of the crank shaft with female screws formed therein are chamfered in respective tapered forms.

In accordance with the invention, the crank shaft is an integral type crank shaft with crank pins formed integrally with the crank shaft by molding, and open edges of the end portions of the crank shaft with the female screws formed therein are chamfered in respective tapered forms.

In the case of an integral type crank shaft formed integrally with crank pins by molding, center holes for supporting the long crank shaft at both shaft ends during machining of the crank shaft are formed and in this case, since open edges of each end portions of the crank shaft with female screws formed therein are chamfered, it is possible to ensure a sufficient support area larger than the screw size and thereby enhance the machining accuracy and improve both machinability and productivity.

Since the fixed pulley half is clamped with a bolt which is threadedly engaged with a female screw formed in the interior of one end portion of the crank shaft, the threadedly engaged portion of the bolt lies inside the crank shaft end and hence can be prevented from the entry of dust and water therein and protected against rust, etc.

Thus, there does not occur such an inconvenience as the bolt sticking to the female screw to the extent of it being unable to be loosened in maintenance.

Further, the threaded portion of the bolt can be made long more easily than the nut, so by making it long it is possible to diminish variations in surface pressure of the screw surface caused by bending of the threaded portion, whereby the fixed pulley half can be clamped firmly in maintenance.

The invention defined in claim 2, in combination with the invention defined in claim 1, resides in an engine wherein the fixed pulley half fixed to the end portion of the crank shaft is provided with cooling fins, and there is provided an outside air inlet port which is open opposedly near a center of the cooling fins.

When the outside air is introduced from the outside air inlet port and a power transfer mechanism is cooled with the cooling fins, even if the bolt fitted in the end portion of the crank shaft is exposed to dust or water, it is possible to protect the threadedly engaged portion.

The invention defined in claim 3, in combination with the invention defined in claim 1 or claim 2, resides in an engine wherein the female screw formed in the interior of the end portion of the crank shaft is formed inwards in the axial direction of the crank shaft with respect to the position of the fixed pulley half.

Since the female screw formed inside the end portion of the crank shaft is formed inwards with respect to the position of the fixed pulley half, a posture varying force of the fixed pulley half relative to the crank shaft induced by a belt reaction force is less exerted on the threaded portion of the bolt and therefore it is possible to prevent the bolt form becoming difficult to loosen in maintenance.
Fig. 1 is a side view of the whole of a scooter type motorcycle to which an internal combustion engine according to an embodiment of the present invention is applied;
Fig. 2 is a partially sectional, partially omitted side view of the internal combustion engine and a belt type automatic transmission;
Fig. 3 is a sectional view taken on line III-III in Fig. 1;
Fig. 4 is a sectional view of a crank shaft;
Fig. 5 is a sectional view of a driving pulley and the vicinity thereof; and
Fig. 6 is a sectional view of a conventional driving pulley and the vicinity thereof.

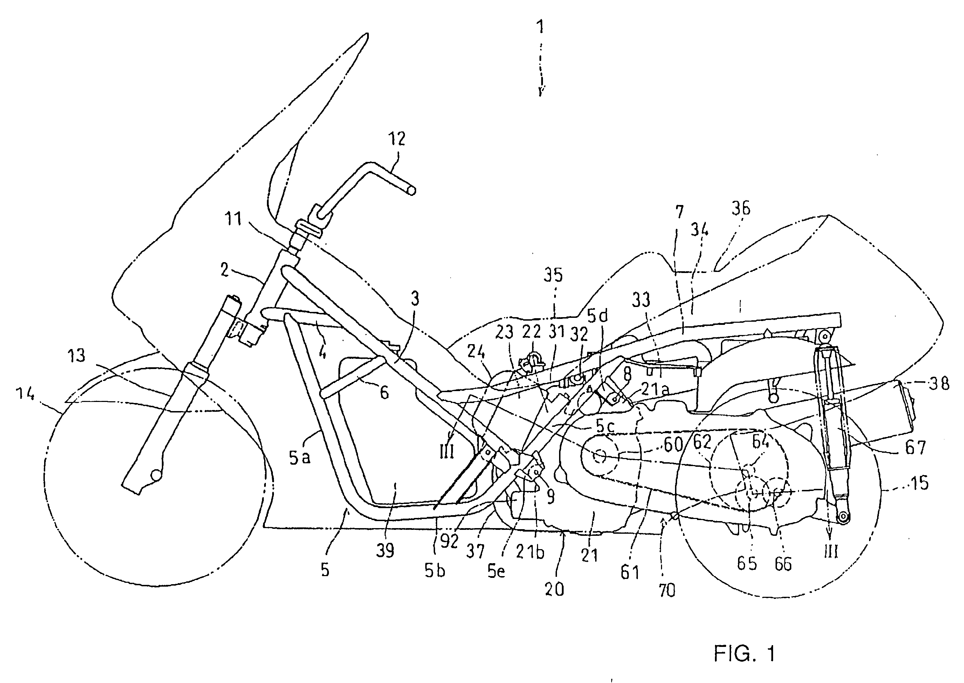

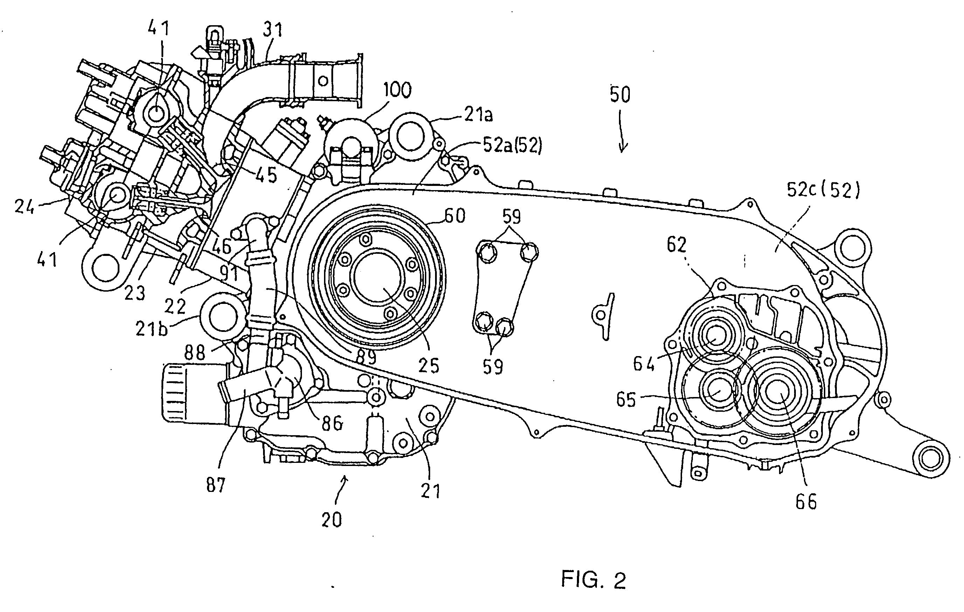

An embodiment of the present invention will be described hereinunder with reference to Figs. 1 to 5.

An internal combustion engine related to this embodiment is applied to a scooter type motorcycle 1. Fig. 1 is a side view showing the whole of the scooter type motorcycle 1.

A body frame of the scooter type motorcycle 1 is constituted as follows. A pair of right and left main pipes 3 extend backward and obliquely downward in a rectilinear form in side view from an upper portion of a head pipe 2. A pair of right and left support pipes 4 extend backward substantially horizontally from a lower portion of the head pipe 2 and are connected to the main pipes 3 to support front portions of the main pipes 3.

A pair of right and left down-pipes 5 extend downward at an acute inclination angle on the right and left sides of the support pipes 4 from intermediate positions of the support pipes to form a pair of front vertical portions 5a, then are bent backward at lower ends of the front vertical portions 5a to form central horizontal portions 5b and are further bent upward at rear ends of the central horizontal portions 5b to form rear inclined portions 5c.

Rear ends of the main pipes 3 are connected to lower portions of the rear inclined portions 5c, and a reinforcing pipe 6 is interposed between each main pipe 3 and each down-pipe 5 which conjointly define a generally triangular shape in side view.

Seat rails 7, whose front ends are fixed to the main pipes 3 at positions somewhat close to rear portions of the main pipes with respect to middle portions of the main pipes, extend obliquely upward and backward up to a rear portion of the vehicle body. The rear inclined portions 5c of the down-pipes 5 are connected at their upper ends to middle portions of the seat rails 7 and support the seat rails from below.

The head pipe 2 supports a steering shaft 11, and above the head pipe 2 there extend handle bars 12 to the right and left, while below the head pipe 2 there extends a front fork 13 downward. A front wheel 14 is supported at a lower end of the front fork 13 through an axle.

Support brackets 5d and 5e are projected backward respectively at upper and lower positions of each rear inclined portion 5c of each down-pipe 5 and an internal combustion engine 20 is suspended from the brackets 5d and 5e each of which make a pair on the right and left sides.

The internal combustion engine 20 is a four-cycle two-cylinder type engine, in which a crank case 21 is positioned behind the rear inclined portions 5c of the down-pipes 5, while a cylinder block 22, a cylinder head 23 and a cylinder head cover 24, which are successively stacked on and combined with the crank case 21, are projected forward from the rear inclined portions 5c of the down-pipes 5 in a largely tilted posture to the front side.

The cylinder block 22, cylinder head 23 and cylinder head cover 24 are positioned between right and left triangular shapes in side view which are the rear inclined portions 5c of the right and left down-pipes 5, rear portions of the main pipes 3 and front portions of the seat rails 7. Mounting brackets 21a projected from an upper portion of the crank case 21 and mounting brackets 21b projected from a front portion of the crank case are supported by the support brackets 5d and 5e, respectively, through support shafts 8 and 9, whereby the internal combustion engine 20 is suspended from the vehicle body frame.

A front portion of a belt type automatic transmission 50 is pivotally secured to the crank case 21 of the internal combustion engine 20. The automatic transmission 50 extends backward and a rear portion thereof supports a rear wheel 15 through an axle.

Intake pipes 31 extend upward respectively from the cylinders in the forwardly tilted cylinder head 23 of the internal combustion engine 20, then are curved backward and connected to carburetors 32 which are arranged in parallel right and left on the crank case 21. The carburetors 32 are connected to an air cleaner 33 disposed behind the carburetors.

The air cleaner 33 is disposed between the right and left seat rails 7, and above the air cleaner 33 a helmet receptacle box 34 is supported bridgewise by the seat rails.

A driver seat 35 covers the internal combustion engine 20 and the carburetors 32 from above so that it can be opened and closed. Likewise, a pillion 36 covers the helmet receptacle box 34 and a rear portion contiguous thereto from above so that it can be opened and closed.

A pair of exhaust pipes 37 extend downward from the cylinder head 23, then are bent rightwards in front of the crank case 21, further extend backward along the right-hand side of the crank case, then are combined together into a single pipe, which rises obliquely upward along the right-hand side of the vehicle body and is connected to a muffler 38 supported on the right-hand side of the rear wheel 15.

In front of the internal combustion engine 20 there is supported a fuel tank 39 bridgewise in a surrounded state by a total of four pipes which are two right and left upper main pipes 3 and two right and left down-pipes 5 located on front and lower sides.

The scooter type motorcycle 1 is roughly constructed as above.

The following description is now provided about the structure of the internal combustion engine 20 and that of the belt type automatic transmission 50 which is pivotally secured to the crank case 21.

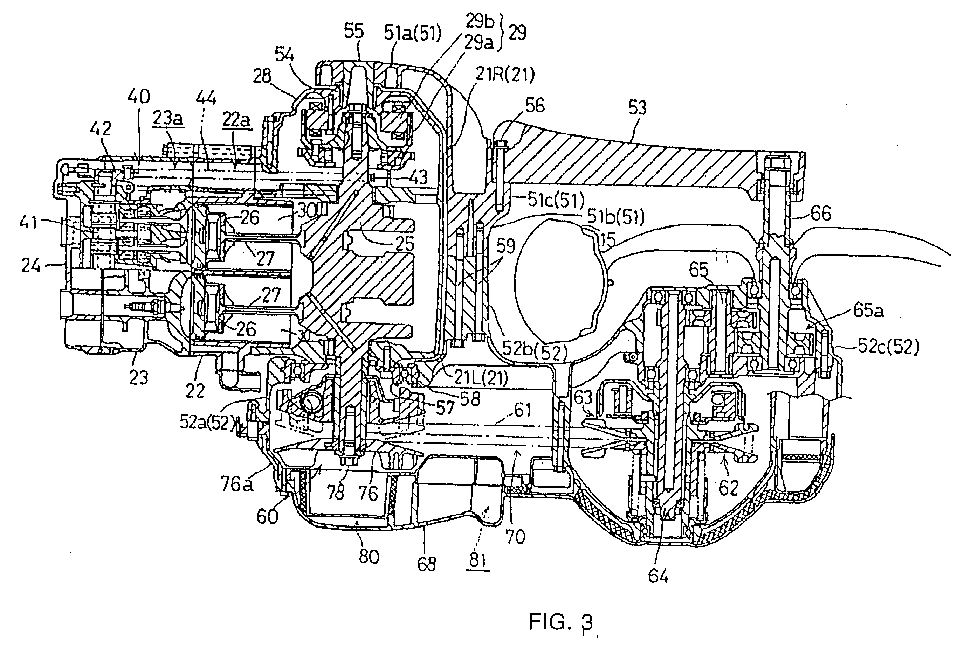

The crank case 21 is constituted by a combination of left and right crank cases 21L, 21R. As shown in Fig. 3, a crank shaft 25 extends horizontally right and left within the crank case 21 and an outer rotor 29a of an AC generator 29 is fitted on a right end portion of the crank shaft 25 and is covered sideways with a case cover 28 which is fixed to the right crank case 21R, with an inner stator 29b of the AC generator 29 being supported by the case cover 28.

Pistons 26 adapted to slide and reciprocate through two cylinder sleeves 30, respectively, in the cylinder block 22 are connected through connecting rods 27 to crank pins integral with the crank shaft 25.

Both crank pins have a phase of 360°.

The cylinder head 23 is provided with a valve operating mechanism 40. In the valve operating mechanism 40, two upper and lower cam shafts 41 extend horizontally right and left, cam chain sprockets 42 are fitted respectively on right end portions of the cam shafts 41, a driving chain sprocket 43 is fitted on a base portion of the crank shaft 25 projecting from the right crank case 21R, and a timing chain 44 is mounted bridgewise between the cam chain sprockets 42 and the drive chain sprocket 43 to effect the transfer of power.

The timing chain 44 extends through cam chain chambers 22a and 23a formed on the right-hand side of both cylinder block 22 and cylinder head 23.

The paired cam shafts 41 drive intake valves 45 and exhaust valves 46 each at a predetermined timing.

The belt type automatic transmission 50 is pivotally secured to the crank case 21 of the internal combustion engine 20 constructed as above.

A case cover 28 closes a right opening of the right crank case 21R and covers the AC generator 29. The case cover 28 has an opening which is coaxial with the crank shaft 25, and a rotary shaft 55 is projected rightwards through the opening and through a bearing 54.
Further, a base end portion 51a of a right transmission case 51 in the belt type automatic transmission 50 is fitted on the above projected portion of the rotary shaft 55.

The right transmission case 51 has a connecting portion 51b which extends from the base end portion 51a inwards along the back of the right crank case 21R.

Mounting boss portions 51c are projected backward from two upper and lower positions of the back of the connecting portion 51b. A left mating surface of a front end of a right fork member 53 is mated with a right mating surface of each mounting boss portion 51c and then both are engaged together threadedly with bolt 56 at the two upper and lower positions. In this way the right fork member 53 is integrally connected to the right transmission case 51 and is extended backward.

On the other hand, a left end portion of the crank shaft 25 is projected leftwards through the left crank case 21L and a driving pulley 60 provided with a centrifugal speed change mechanism is provided on the projected portion of the crank shaft 25.

An annular support member 57 is fixed to an outer surface of the left crank case 21L with the crank shaft 25 passing therethrough and around the crank shaft, and a base end portion 52a of a left transmission case 52 is pivotably supported by the annular support member 57 through a bearing 58.

The left transmission case 52 has a connecting portion 52b extending inwards from the base end portion 52a and along the back of the left crank case 21L and also has a left fork portion 52c extending further backward.

The connecting portion 51b of the right transmission case 51 extending inwards from the right-hand side and the connecting portion 52b of the left transmission case 52 extending inwards from the left-hand side both along the back of the crank case 21 are abutted against each other at the respective mating surfaces for connection and four bolts 59 are inserted threadedly into the thus-mated portion to connect the right and left transmission cases 51, 52 with each other, whereby the left fork portion 52c and the right fork member 53 are connected opposedly to each other.

The right transmission case 51 thus connected is supported swingably around the crank shaft 25 by the bearing 54, while the left transmission case 52 is supported swingably around the crank shaft by the bearing 58, so that the left fork portion 52c and the right fork member 53 opposed to each other are supported integrally and vertically swingably around the crank shaft 25.

A rear portion of the left form portion 52c of the left transmission case 52 serves as a transmission chamber, in which a driven shaft 64 is supported rotatably and a driven pulley 62 is supported on the driven shaft 64 through a centrifugal clutch 63.

A V belt 61 is mounted bridgewise between the driven pulley 62 and the driving pulley 60 to constitute a V belt type transmission 70.

Within the transmission chamber formed in the rear portion of the left fork portion 52c there is constituted a reduction mechanism by transmission gears 65a through which a driving force is transmitted from a driven shaft 64 to an axle 66 via a counter shaft 65.

The axle 66 is rotatably mounted bridgewise between the left fork portion 52c and the right fork member 53 and the rear wheel 15 is supported by the axle 66 between the left fork portion 52c and the right fork member 53.

Thus, the right and left transmission cases 51, 52 which support the V belt type transmission 70 are supported so that the left form portion 52c, the right fork member 53 and the rear wheel 15 are swingable vertically around the crank shaft 25.

A rear cushion 67 is mounted between a rear end of the left transmission case 52 and a seat rail 7.

A left opening of the left transmission case 52 which accommodates the V belt type transmission 70 is closed with a belt cover 68.

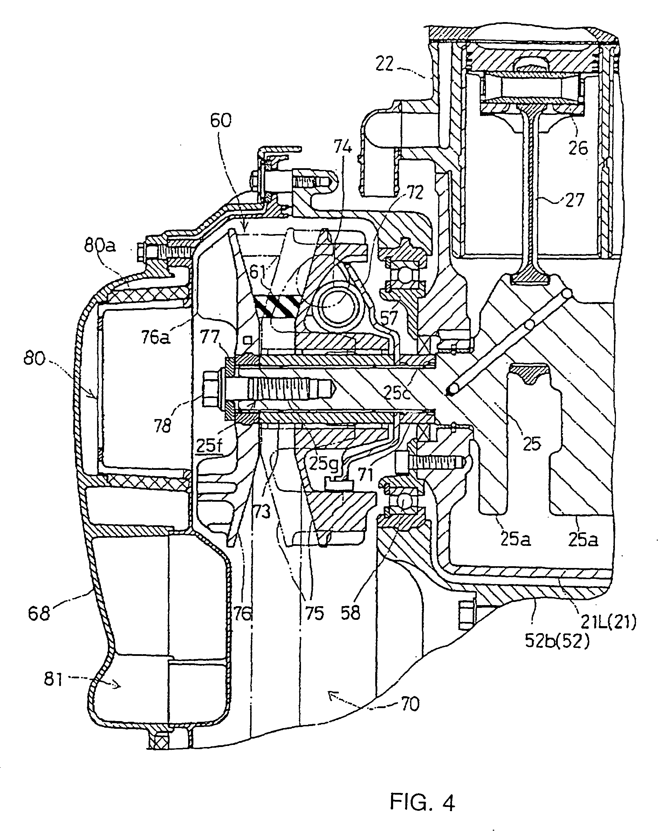

A detailed structure on the driving pulley 60 side of the V belt type transmission 70 is shown in Fig. 4.

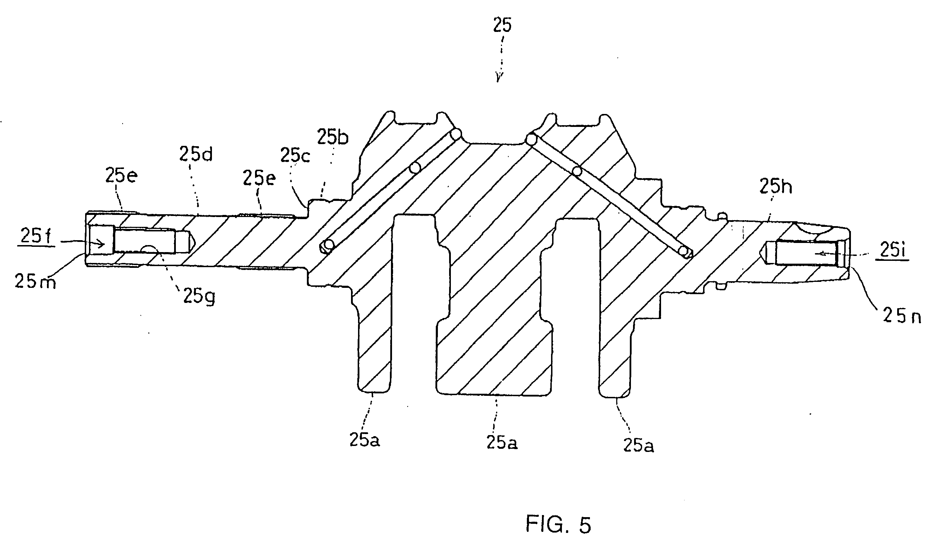

The driving pulley 60 is mounted on the left end portion of the crank shaft 25, but the crank shaft 25 itself is an integral type crank shaft obtained by molding a crank shape and thereafter finishing a journal portion, that is, molding crank pins integrally, as shown in Fig. 5.

A left shaft portion 25d of a reduced diameter projects leftward through a stepped portion 25c from a base end portion 25b of a left crank weight 25a in the crank shaft 25.

On an outer peripheral surface of the left shaft portion 25d are formed serrations 25e by plural ridges facing in the axial direction.

A bolt hole 25f is formed in an end face of the left shaft portion 25d up to a depth of about half of the left shaft portion, and a female screw 25g is formed centrally of the bolt hole 25f except right and left end portions of the same hole.

Also in a right shaft portion 25h of the crank shaft 25 there is formed a bolt hole 25i.

At both left and right ends of the crank shaft 25, open edges of the shaft ends facing the bolt holes 25f and 25i are chamfered in a tapered shape to form tapered portions 25m and 25n.

When the long, integral type crank shaft 25 is to be machined, the tapered portions 25m and 25n are used as center holes for supporting the crank shaft 25 at both ends of the shaft, whereby a sufficient support area larger than the screw size can be ensured, that is, the machining accuracy can be enhanced, and it is possible to improve both machinability and productivity.

A short sleeve 71, a ramp plate 72, and a long sleeve 73 are serration-fitted in this order on the left shaft portion 25d of the crank shaft 25. The short sleeve 71 is abutted against the stepped portion 25c and the ramp plate 72 is sandwiched in between the short sleeve 71 and the long sleeve 73.

The long sleeve 73 is serrated also on its outer peripheral surface and a movable pulley half 75 is fitted on the long sleeve axially slidably.

A centrifugal weight 74 is inserted between the movable pulley half 75 and the ramp plate 72 in radially movable manner.

A fixed pulley half 76 is serration-fitted on an end of the left shaft portion 25d exposed from the long sleeve 73.

A peripheral edge portion of a central circular hole of the fixed pulley half 76 somewhat projects outwards from the end face of the left shaft portion 25d. A washer 77 is brought into abutment against the peripheral edge portion and a flanged bolt 78 is inserted through the washer 77 threadedly into the bolt hole 25f.

The bolt 78, when threadedly engaged with the female screw 25g of the bolt hole 25f, pinches the fixed pulley half 76, long sleeve 73, ramp plate 72 and short sleeve 71 between it and the stepped portion 25c of the left shaft portion 25d through the washer 77, thereby clamping the fixed pulley half 76.

In this way the fixed pulley half 76 is clamped and fixed with bolt 78 to the end portion of the crank shaft 25 and rotates together with the crank shaft.

The movable pulley half 75, which is serration-fitted on the long sleeve 73, is axially slidable simultaneously with its rotation together with the crank shaft 25, and the V belt 61 is entrained on and between the movable pulley half and the fixed pulley half 76 opposed thereto.

Opposed surfaces of the fixed pulley half 76 and the movable pulley half 75 are tapered in V section and the V belt 61 is sandwiched in between both tapered surfaces.

In the driving pulley 60 having the above structure, the centrifugal weight 74 is accommodated radially movably between the movable pulley half 75 and the ramp plate 72 fixed onto the crank shaft 25, so with an increase in rotational speed of the crank shaft 25, the centrifugal weight 74 moves in the centrifugal direction and causes the movable pulley half 75 to slide leftwards, with the result that the winding diameter of the V belt 61 entrained on and between the movable and fixed pulley halves 75, 76 becomes larger, thus permitting automatic speed change in a continuously various manner and the transfer of power to the rear wheel side.

Since the fixed pulley half 76 is clamped with bolt 78 to an end portion of the crank shaft 25, the threaded portion (the female screw 25g) does not obstruct the introduction of the outside air although it is long in comparison with a nut, and thus the cooling performance for the V belt type transmission 70 is improved.

Further, since the female screw 25g formed inside a an end portion of the crank shaft 25 is formed inwards in the axial direction with respect to the position of the fixed pulley half 76, a posture varying force of the fixed pulley half 76 against the crank shaft 25 induced by a belt reaction force is less exerted on the threaded portion (female screw 25g) of the bolt 78 and therefore the bolt can surely be loosened from its threadedly engaged state in maintenance.

Cooling fins 76a are formed on the back of the fixed pulley half 76 and an air cleaner 80 for cooling is provided in a front portion of the belt cover 68 which covers the V belt type transmission 70 from the left side, the air cleaner 80 being positioned sideways of the cooling fins 76a.

With rotation of the cooling fins 76a which are integral with the crank shaft 25, the outside air, which is introduced though an outside air introducing path 81 from an outside air opening (not shown) formed in a central upper portion of an outer wall of the belt cover 68, is purified by a cleaner element 80a of the cooling air cleaner 80 and is fed inside the belt cover 68 to cool the V belt type transmission, thereby improving the durability of the transmission.

Inside the belt cover 68, dust is removed by the cooling air cleaner 80, but not to a complete extent, and the entry of water also occurs.

In this connection, since the fixed pulley half 76 is clamped with bolt 78 to an end portion of the crank shaft 25 and the bolt 78 is threadedly engaged with the female screw 25g which is formed inside the crank shaft end portion, the threadedly engaged portion of the bolt 78 is positioned inside the crank shaft end portion, so that the entry of dust and water is prevented and the threadedly engaged portion can be protected against rust, etc.

Accordingly, there occurs no such inconvenience as the bolt 78 being engaged with the female screw 25g more tightly than necessary and becoming difficult to be loosened in maintenance.

Further, since the fixed pulley half 76 is clamped with bolt 78 to an end portion of the crank shaft 25, the crank shaft 25 does not project sideways outward from the fixed pulley half 76, so that the crank shaft 25 can be substantially shortened in comparison with clamping with nut in which case a male screw projects sideways outward from the fixed pulley half.

It is intended to provide a V belt type transmission capable of clamping a fixed pulley half firmly and capable of preventing the entry of dust and water into a fixed pulley half clamping threaded portion formed in an end portion of a crank shaft and thereby protecting the threaded portion from rust, etc.

In a V belt type transmission wherein a V belt is entrained on a pulley 60, the pulley 60 comprising a fixed pulley half 76 fixed to an end portion of a crank shaft 25 and a movable pulley half 75 supported on the crank shaft 25 axially slidably in opposition to the fixed pulley half 76, the fixed pulley half 76 is clamped with a bolt 78 which is threadedly engaged with a female screw 25g formed inside an end portion of the crank shaft 25.

## Claims

1. Engine combined with a V belt type transmission wherein a V belt (61) is entrained on pulleys (60), the pulleys comprising a fixed pulley half (76) fixed to one end portion of a crank shaft (25) and a movable pulley half (75) supported on the crank shaft (25) opposedly to the fixed pulley half (76) and axially slidably,
wherein the fixed pulley half (76) is clamped with a bolt (78) which is threadedly engaged with a female screw (25g) formed inside the one end portion of the crank shaft (25),
**characterized in that** the engine is a four-cycle two-cylinder type engine with both crank pins having a phase of 360°, wherein the crank shaft (25) is an integral type crank shaft with the crank pins formed integrally with the crank shaft by molding, and open edges (25m, 25n) of both end portions of the crank shaft (25) with female screws (25g) formed therein are chamfered in respective tapered forms.

2. Engine according to claim 1, wherein the fixed pulley half (76) fixed to the one end portion of the crank shaft (25) is provided with cooling fins (76a), and there is provided an outside air inlet port (81) which is open opposedly near a center of the cooling fins (76a).

3. Engine according to claim 1 or claim 2, wherein the female screw (25g) formed inside the one end portion of the crank shaft (25) is formed inwards in the axial direction of the crank shaft (25) with respect to the position of the fixed pulley half (76).

## Patentansprüche

1. Mit einem Keilriemengetriebe kombinierter Motor, worin ein Keilriemen (61) auf Riemenscheiben (60) mitgenommen wird, wobei die Riemenscheiben eine feste Riemenscheibenhälfte (76), die am einen Endabschnitteiner Kurbelwelle(25)befestigt ist, sowie eine bewegliche Riemenscheibenhälfte (75), die an der Kurbelwelle (25) gegenüber der festen Riemenscheibenhälfte (76) und axial verschiebbar gelagert ist,
wobei die feste Riemenscheibenhälfte (76) mit einem Bolzen (78) eingespannt ist, der mit einem Innengewinde (25g) in Gewindeeingriff steht, das innerhalb des einen Endabschnitts der Kurbelwelle (25) ausgebildet ist,
**dadurch gekennzeichnet, dass** der Motor ein Zweizylinder-Viertaktmotor ist, bei dem beide Kurbelzapfen eine Phase von 360° haben, worin die Kurbelwelle (25) eine einstückige Kurbelwelle ist, deren Kurbelzapfen durch Formung einstückig mit der Kurbelwelle ausgebildet sind, und offene Ränder (25m, 25n) beider Endabschnitte der Kurbelwelle (25), in denen Innengewinde (25g) ausgebildet sind, in jeweiligen verjüngten Formen abgeschrägt sind.

2. Motor nach Anspruch 1, worin die feste Riemenscheibenhälfte (76), die an dem einen Endabschnitt der Kurbelwelle (25) befestigt ist, mit Kühlrippen (76a) versehen ist, und dort eine Außenlufteinlassöffnung (81) vorgesehen ist, die angenähert gegenüber einer Mitte der Kühlrippen (76a) offen ist.

3. Motor nach Anspruch 1 oder Anspruch 2, worin das Innengewinde (25g), das innerhalb des einen Endabschnitts der Kurbelwelle (25) ausgebildet ist, in der axialen Richtung der Kurbelwelle (25) in Bezug auf die Position der festen Riemenscheibenhälfte (76) einwärts ausgebildet ist.

## Revendications

1. Moteur combiné avec une transmission du type à courroie en V, dans lequel une courroie en V (61) est entraînée sur des poulies (60), les poulies comprenant une moitié de poulie fixe (76) fixée à une première partie d'extrémité d'un vilebrequin (25), et une moitié de poulie mobile (75) supportée sur le vilebrequin (25) à l'opposé de la moitié de poulie fixe (76) et apte à coulisser axialement ;
dans lequel la moitié de poulie fixe (76) est serrée avec un boulon (78) qui est engagé de manière à pouvoir être vissé avec une vis femelle (25g) formée à l'intérieur de la première partie d'extrémité du vilebrequin (25) ;
**caractérisé en ce que** le moteur est un moteur de type à deux cylindres et quatre temps dans lequel les deux manetons ont une phase de 360°, dans lequel le vilebrequin (25) est un vilebrequin de type intégral dans lequel les manetons sont formés d'un seul tenant avec le vilebrequin par moulage, et dans lequel des bords ouverts (25m, 25n) des deux parties d'extrémité du vilebrequin (25) avec les vis femelles (25g) formées dans celles-ci sont chanfreinées dans des formes coniques respectives.

2. Moteur selon la revendication 1, dans lequel la moitié de poulie fixe (76) fixée à la première partie d'extrémité du vilebrequin (25) est pourvue d'ailettes de refroidissement (76a), et il est prévu un orifice d'entrée d'air extérieur (81) qui est ouvert à l'opposé près d'un centre des ailettes de refroidissement (76a).

3. Moteur selon la revendication 1 ou la revendication 2, dans lequel la vis femelle (25g) formée à l'intérieur de la première partie d'extrémité du vilebrequin (25) est formée vers l'intérieur dans la direction axiale du vilebrequin (25) par rapport à la position de la moitié de poulie fixe (76).
